# EUROPEAN PATENT SPECIFICATION

(11) **EP 2 528 700 B1**
(45) Date of publication and mention of the grant of the patent: **16.04.2014**
(21) Application number: 11737422.3
(22) Date of filing: 04.01.2011
(51) Int. Cl.: B21C 47/24

(54) **COIL DOWNENDER**
BUNDWENDEVORRICHTUNG
DISPOSITIF CULBUTEUR DE BOBINE

(30) Priority: 27.01.2010 US 694401
(43) Date of publication of application: 05.12.2012
(73) Proprietor: Siemens Industry, Inc., Alpharetta, GA 30005-4437 (US)
(72) Inventor: HOLLOWAY, Ward M., Barre Massachusetts 01005 (US)
(74) Representative: Capré, Didier
(86) International application number: PCT/US2011/020103
(87) International publication number: WO 2011/094032

(56) References cited:
- US-A- 3 206 049
- US-A- 3 753 505
- US-A- 5 735 477

## Description

### BACKGROUND DISCUSSION

### 1. Field of the Invention

This invention relates generally to material handling equipment, and is concerned in particular with the provision of a novel and improved downender for use in a rolling mill to translate cylindrical coils of hot rolled products from vertical to horizontal positions.

### 2 Description of the Prior Art

In the typical rolling mill downender, as shown for example in document US 5 7 35 477 A, the axis of the coil does not extend across the axis of rotation about which the coil is translated from a vertical to a horizontal position. This increases the offset of the center of gravity of the coil from the axis of rotation, which in turn increases the power required to effect coil translation. In order to satisfy this increased power demand, equipment designers have conventionally resorted to the use of hydraulic linear actuators, which occupy considerable space and require expensive associated components, including hydraulic pumps, piping, and circuitry.

The objective of the present invention is to provide an improved downender in which the coil axis extends across the rotational axis about which the coil is translated, thereby advantageously positioning the coil center of gravity closer to the downender's rotational axis. This in turn reduces power requirements and makes it possible to employ less complicated and less expensive electrically powered drive components.

### SUMMARY OF THE INVENTION

Broadly stated, the present invention comprises an apparatus for downending a vertically disposed cylindrical coil supported on an underlying pallet, with a stem projecting from the pallet and extending axially through the coil. The apparatus includes a cradle rotatable about a horizontal axis. A table on the cradle is configured and arranged to receive and retain the pallet with the coil in a vertical first position at which the coil axis extends across the horizontal rotational axis of the cradle. An electrically powered drive serves to rotate the cradle about its horizontal axis to translate the coil from its vertical position to a horizontal position.

These and other features and their attendant advantages will now be described in greater detail with reference to the accompanying drawings, wherein:

### BRIEF DESCRIPTION OF THE DRAWINGS:

Figure 1 is a side elevational view of a downender in accordance with the present invention, with a coil supported in a vertical first position;
Figure 2 is a top plan view of the downender;
Figure 3 is an end view of the downender;

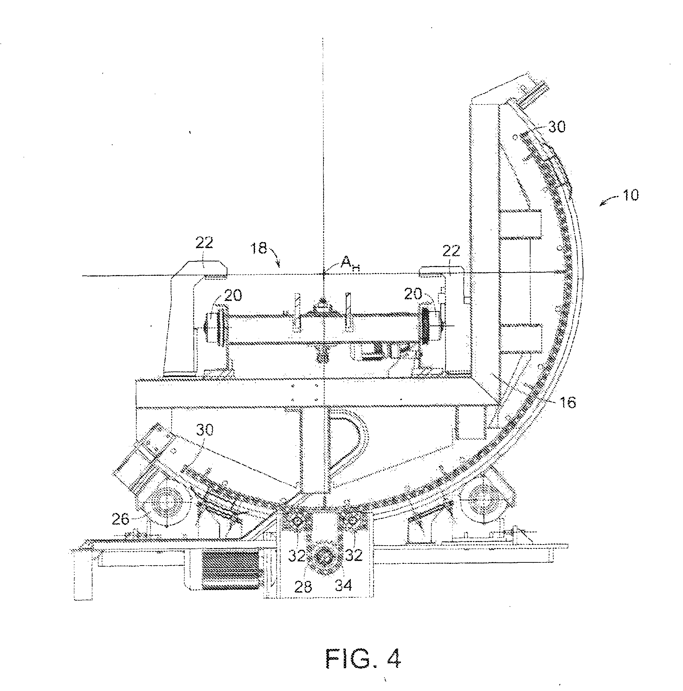

Figure 4 is a sectional view taken on line 4-4 of Figure 3;
Figure 5 is a view similar to Figure 1 showing the coil downended to a horizontal second position; and
Figure 6 is an enlarged view of the circled portion shown in Figure 1.

### DETAILED DESCRIPTION

Referring now to the drawings, an apparatus for downending a vertically disposed cylindrical coil "C" is shown at 10. The coil is supported on an underlying pallet 12, with a stem 14 projecting upwardly from the pallet and axially through the coil.

The apparatus includes a cradle 16 rotatable about a horizontal axis "A_{H}". A table 18 on the cradle includes rollers 20 on which the pallet 12 is received along axis A_{H}. Hook-shaped brackets 22 serve to retain the pallet 12 on the table rollers 20, with the coil in a first vertical position at which the coil axis A_{C} extends across the horizontal axis A_{H}, thus aligning the center of gravity of the coil with axis A_{H}.

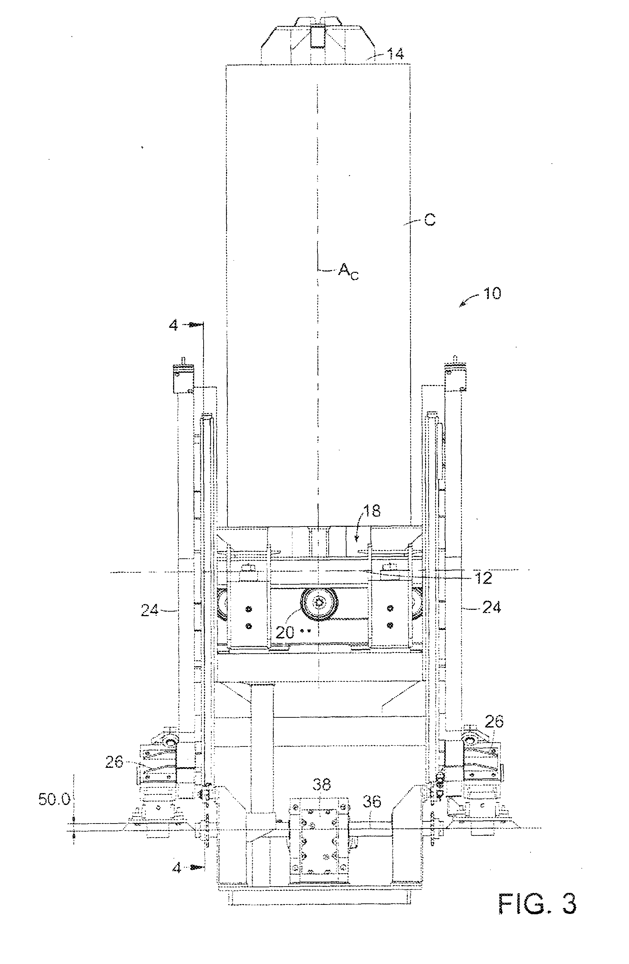

The cradle is provided with at least one and preferably two partially circular tracks 24 arranged concentrically with respect to axis A_{H}. The tracks 24 are supported on stationary bearings 26 for rotation about axis A_{H}. As can best be seen in Figure 3, the tracks 24 are parallel and spaced one from the other along axis A_{H}, with the table 18 located between the tracks.

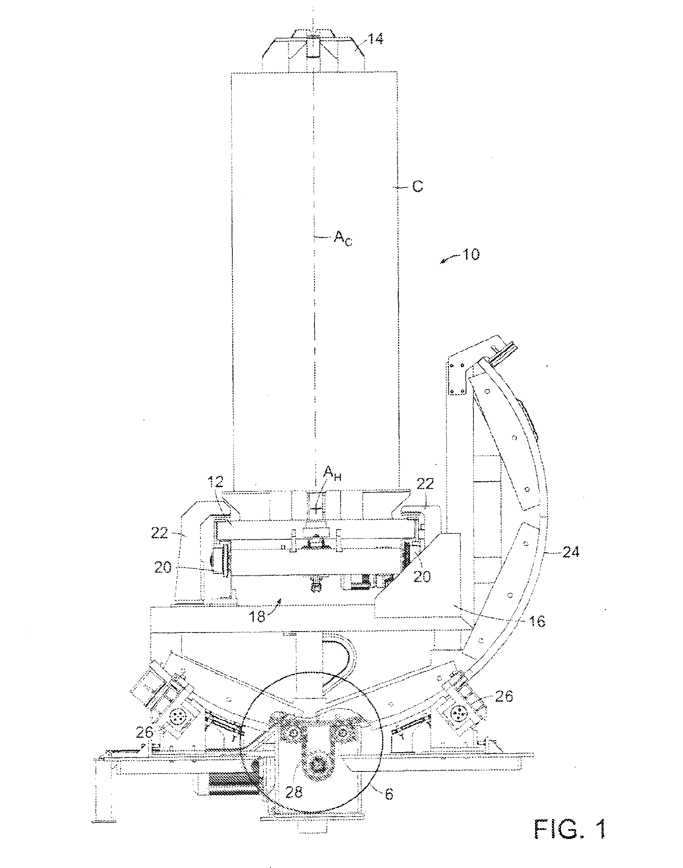

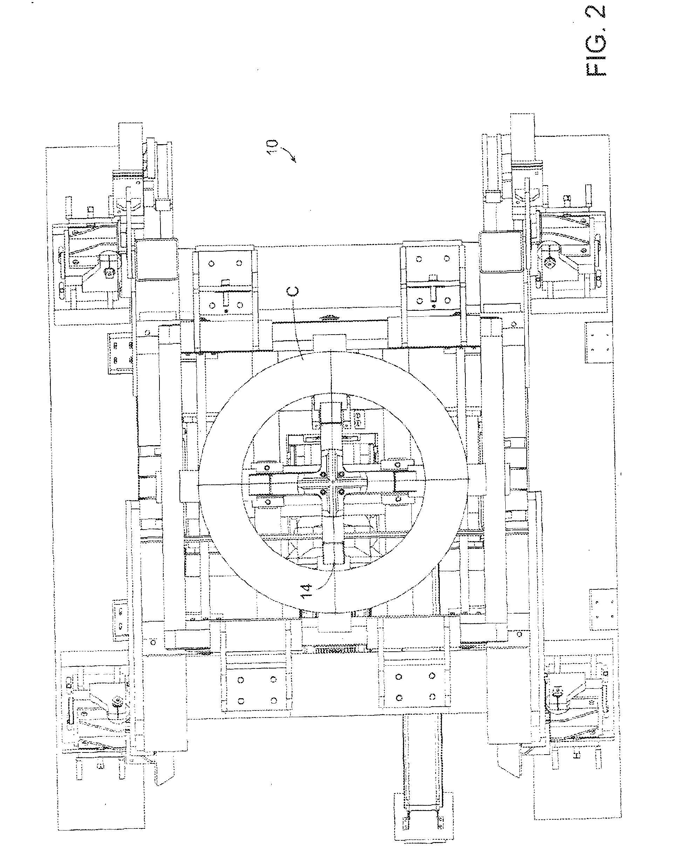

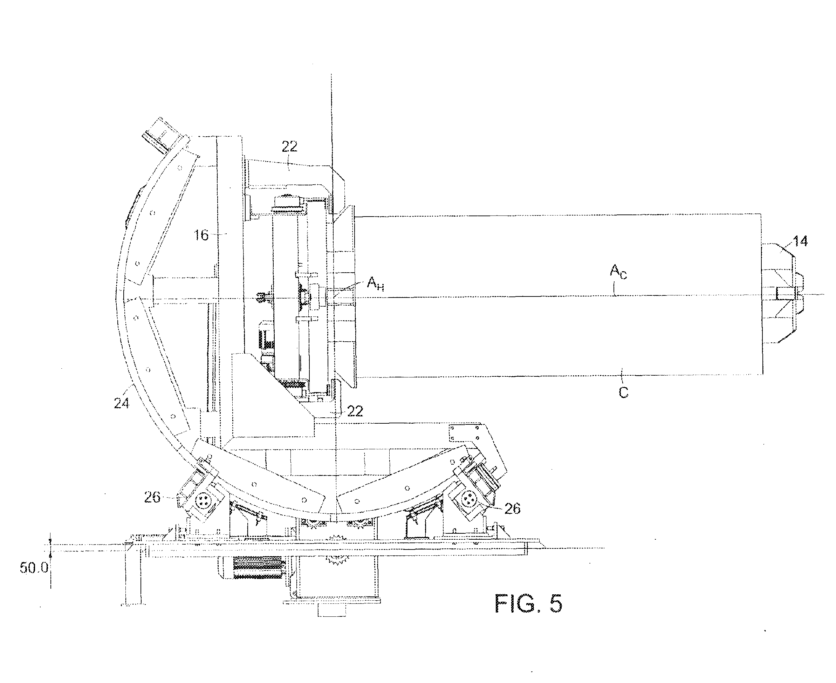

An electrically powered drive serves to rotate the cradle about axis A_{H} in order to translate the coil from its vertical first position as shown in Figures 1-3, to a horizontal second position as shown in Figure 5. The drive comprises chains 28 of finite length extending around the tracks 24, with the opposite ends of the chains fixed as at 30 with respect to the tracks.

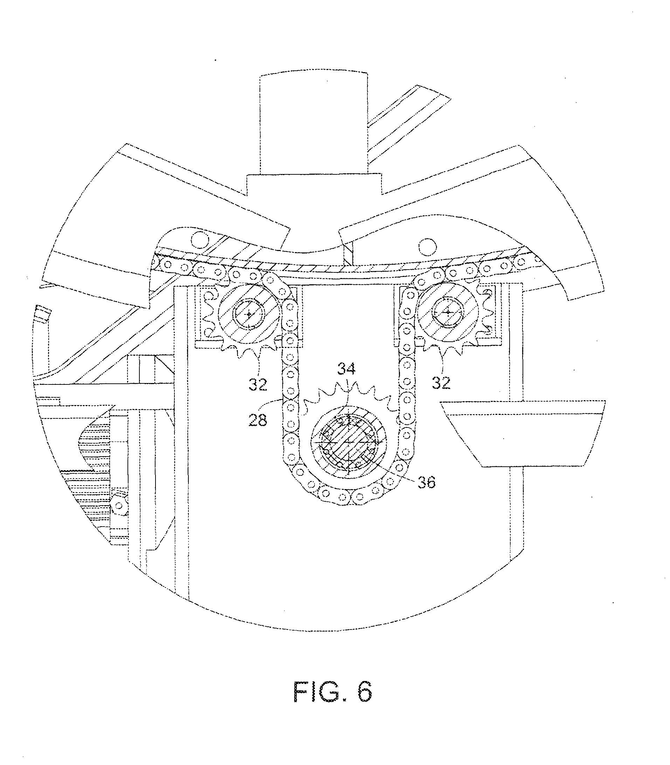

As can best be seen in Figure 6, a segment of each chain 28 extends over idler sprockets 32 and around a drive sprocket 34. As shown in Figure 3, the drive sprockets 34 of the chains 28 are supported on a common shaft 36 driven by an electrically powered gear motor 38.

In light of the foregoing, it will now be understood by those skilled in the art that by initially positioning the coil C with its axis A_{C} extending across axis A_{H}, thus aligning the center of gravity of the coil with axis A_{H}, the power required to rotate the coil to the horizontal position shown in Figure 5 is less than the power that would be required to do so if the coil axis A_{C} did not extend across axis A_{H}. This reduced power requirement makes it possible to employ a more compact and less expensive electrically powered drive.

The foregoing description has been set forth to illustrate the invention and is not intended to be limiting. Since further modifications of the described embodiments may occur to persons skilled in the art, the scope of invention should be limited solely with reference to the appended claims.

## Claims

1. Apparatus for downending a vertically disposed cylindrical coil (C) supported on an underlying pallet (12), with a stem (14) projecting from the pallet through the coil (C), said apparatus being **characterized in that** it comprises:
a cradle (16) rotatable about a horizontal axis (A_{H});
a table (18) on said cradle, said table being configured and arranged to receive and
retain said pallet with said coil in a vertical first position at which the coil
axis (A_{C}) extends across said horizontal axis(A_{H}); and
drive means (38) for rotating said cradle about said horizontal axis to translate said coil
from said vertical first position to a horizontal second position.

2. The apparatus of claim 1 wherein said cradle is provided with at least one partially circular track (24) arranged concentrically with respect to said horizontal axis (A_{H}), said track being supported on stationary bearings (26) for rotation about said horizontal axis.

3. The apparatus of claim 2 wherein said drive means comprises a chain (28) of finite length extending around said track, with opposite ends of said chain fixed with respect to said track, and with a segment of said chain between the chain ends being engaged by a sprocket (34), whereby rotation of said sprocket will result in rotation of said track and said cradle about said horizontal axis.

4. The apparatus of claim 3 wherein said sprocket is electrically driven.

5. The apparatus of claim 2 wherein two of said circular tracks (24) are arranged in parallel planes, with said table being located between said tracks.

6. The apparatus of claims 1 or 5 wherein said table is a roller table on which said pallet is received along said horizontal axis.

7. The apparatus of claim 6 further comprising means (22) for retaining said pallet on said roller table during translation of said coil from said vertical first position to said horizontal second position.

8. The apparatus of claim 1 wherein said cradle has a pair of partially
circular tracks (24) arranged concentrically with respect to said horizontal axis and spaced one
from the other along said horizontal axis;
and wherein said table is positioned on said cradle between said tracks, and wherein said drive means
comprise chains (28) of finite length extending around said tracks, with opposite ends of said chains fixed with respect to their respective tracks, and with segments of said chains between said ends being engaged by sprockets (32,34), whereby rotation of said sprockets will result in rotation of said
tracks and said cradle about said horizontal axis.

9. The apparatus of claim 8 wherein said sprockets are carried on a common shaft (36) driven by an electrically powered motor.

## Patentansprüche

1. Vorrichtung zum Wenden eines vertikal angeordneten zylindrischen Bundes (C), der auf einer darunterliegenden Palette (12) gestützt wird, mit einem Stamm (14), der ausgehend von der Palette den Bund (C) durchdringt, wobei besagte Vorrichtung dadurch charakterisiert ist, dass sie folgendes umfasst:
einen Spulenträger (16), der um eine horizontale Achse (A_{H}) rotierbar ist;
einen Tisch auf besagtem Spulenträger, wobei besagter Tisch gestaltet und arrangiert ist um die besagte Drehscheibe aufzunehmen und zu sichern, wobei diese Drehscheibe mit besagtem Bund in einer ersten vertikalen Position ausgerichtet ist, in der sich die Bundachse (A_{C}) über die horizontale Achse (A_{H}) erstreckt; und
Antriebsmittel (38) um besagten Spulenträger um besagte horizontale Achse zu rotieren um den Bund aus der vertikalen ersten Position in eine horizontale zweite Position zu überführen.

2. Die Vorrichtung nach Anspruch 1, wobei besagter Spulenträger mit mindestens einer teilweise kreisförmigen Spur (24) versehen ist, die mit Bezug auf die horizontale Achse (A_{H}) konzentrisch ausgerichtet ist, wobei besagte Spur durch stationäre Auflagerungen (26) für die Rotation um besagte horizontale Achse gestützt wird.

3. Die Vorrichtung nach Anspruch 2, wobei besagte Antriebsmittel eine sich um besagte Spur erstreckende Kette (28) von begrenzter Länge beinhalten, wobei die gegenüberliegenden Enden von besagter Kette mit Bezug auf die besagte Spur fixiert sind, und mit einem zwischen den Kettenenden liegenden Segment besagter Kette, das mit einem Zahnkranz (34) zusammenwirkt, wobei eine Drehung des Zahnkranzes (34) eine Drehung besagter Spur und besagtem Spulenträger um besagte horizontale Achse herbeiführt.

4. Die Vorrichtung nach Anspruch 3, wobei besagter Zahnkranz elektrisch angetrieben wird.

5. Die Vorrichtung nach Anspruch 2, wobei zwei von den besagten kreisförmigen Spuren (24) in parallelen Ebenen angeordnet sind und wobei besagter Tisch zwischen den beiden Spuren gelegen ist.

6. Die Vorrichtung nach Anspruch 1 oder 5, wobei besagter Tisch ein Rolltisch ist, auf dem besagte Drehscheibe entlang besagter horizontalen Achse aufgenommen wird.

7. Die Vorrichtung nach Anspruch 6, weiter umfassend Mittel (22) um die Drehscheibe auf dem Rolltisch während der Verschiebung von dem Bund aus der ersten vertikalen Position in die zweite horizontale Position zu sichern.

8. Die Vorrichtung nach Anspruch 1, wobei besagter Spulenträger ein Paar von teilweise kreisförmigen Spuren (24) aufweist, die mit Bezug auf die horizontale Achse konzentrisch und mit einem Abstand zwischen einander entlang der horizontalen Achse angeordnet sind; und wobei der Tisch auf dem Spulenträger zwischen den Spuren angeordnet ist, und wobei die Antriebsmittel eine sich um besagte Spur erstreckende Kette (28) von begrenzter Länge umfassen, und wobei die gegenüberliegenden Enden von besagter Kette, mit Bezug auf die betreffenden Spuren, fixiert sind, und mit einem zwischen den Kettenenden liegenden Segmenten besagter Kette, die mit den Zahnkränzen (32,34) in Eingriff stehen, und wobei eine Drehung der Zahnkränze in einer Drehung der Spuren und des Spulenträgers um besagte horizontale Achse resultiert.

9. Die Vorrichtung nach Anspruch 8, wobei besagte Spulenträger auf einer gemeinsamen Welle (36) sitzen, die von einem elektrisch angetriebenen Motor angetrieben wird.

## Revendications

1. Dispositif destiné à culbuter une bobine cylindrique (C) disposée verticalement et supportée sur une palette sous-jacente (12), avec une tige (14) se projetant depuis la palette à travers la bobine (C), ledit dispositif étant **caractérisé en ce qu'**il comprend :
- un berceau (16) pouvant tourner autour d'un axe horizontal (A_{H}) ;
- une table (18) sur ledit berceau, ladite table étant configurée et agencée pour recevoir et retenir ladite palette avec ladite bobine dans une première position verticale dans laquelle l'axe de bobine (A_{C}) s'étend à travers ledit axe horizontal (A_{H}) ; et
- un moyen d'entraînement (38) destiné à faire tourner ledit berceau autour dudit axe horizontal afin de translater ladite bobine de ladite première position verticale dans une seconde position horizontale.

2. Dispositif selon la revendication 1, dans lequel ledit berceau est muni d'au moins un chemin de roulement partiellement circulaire (24) agencé concentriquement par rapport audit axe horizontal (A_{H}), ledit chemin de roulement étant supporté sur des paliers fixes (26) pour tourner autour dudit axe horizontal.

3. Dispositif selon la revendication 2, dans lequel ledit moyen d'entraînement comprend une chaîne (28) de longueur limitée s'étendant autour dudit chemin de roulement, les extrémités opposées de ladite chaîne étant fixées par rapport audit chemin de roulement, et un segment de ladite chaîne entre les extrémités de chaîne étant engagé par une roue (34), la rotation de ladite roue permettant de faire tourner ledit chemin de roulement et ledit berceau autour dudit axe horizontal.

4. Dispositif selon la revendication 3, dans lequel ladite roue est entraînée électriquement.

5. Dispositif selon la revendication 2, dans lequel deux desdits chemins de roulement circulaires (24) sont agencés dans des plans parallèles, ladite table étant située entre lesdits chemins de roulement.

6. Dispositif selon la revendication 1 ou 5, dans lequel ladite table est une table à rouleaux sur laquelle ladite palette est reçue le long dudit axe horizontal.

7. Dispositif selon la revendication 6 comprenant en outre un moyen (22) destiné à retenir ladite palette sur ladite table à rouleaux pendant la translation de ladite bobine de ladite première position verticale dans ladite seconde position horizontale.

8. Dispositif selon la revendication 1, dans lequel ledit berceau comprend une paire de chemins de roulement partiellement circulaires (24) agencés concentriquement par rapport audit axe horizontal et espacés l'un de l'autre le long dudit axe horizontal ;
et dans lequel ladite table est positionnée sur ledit berceau entre lesdits chemins de roulement,
et dans lequel ledit moyen d'entraînement comprend des chaînes (28) de longueur limitée s'étendant autour desdits chemins de roulement, les extrémités opposées desdites chaînes étant fixées par rapport à leurs chemins de roulement respectifs, et les segments desdites chaînes entre lesdites extrémités étant engagés par des roues (32,34), la rotation desdites roues permettant de faire tourner lesdits chemins de roulement et ledit berceau autour dudit axe horizontal.

9. Dispositif selon la revendication 8, dans lequel lesdites roues sont supportées sur un arbre commun (36) entraîné par un moteur électrique.
